Europäisches Patentamt

European Patent Office

Office européen des brevets

(11) Publication number: **0 154 049**
**B1**

(12) **EUROPEAN PATENT SPECIFICATION**

(45) Date of publication of patent specification: **13.04.88**

(21) Application number: **84201778.2**

(22) Date of filing: **03.12.84**

(51) Int. Cl.⁴: **A 01 C 3/02, B 65 D 6/18,
B 65 D 19/10, E 04 H 17/16**

(54) Holder or container for compost or suchlike material.

(30) Priority: **06.01.84 BE 1010936**

(43) Date of publication of application:
**11.09.85 Bulletin 85/37**

(45) Publication of the grant of the patent:
**13.04.88 Bulletin 88/15**

(84) Designated Contracting States:
**AT BE CH DE FR GB IT LI LU NL SE**

(56) References cited:
**AT-B- 296 157
FR-A-1 337 862
GB-A- 623 141
US-A-2 503 811
US-A-2 804 227**

(73) Proprietor: **N.V. BEKAERT S.A.
Bekaertstraat 2
B-8550 Zwevegem (BE)**

(72) Inventor: **Bruggeman, Frans
Dorenstraat 4
B-9690 Kluisbergen (BE)**

(74) Representative: **Demeester, Gabriel et al
N.V. Bekaert S.A. Bekaertstraat 2
B-8550 Zwevegem (BE)**

Courier Press, Leamington Spa, England.

# Description

The invention relates to a holder or container for compost or such like material, comprising a number of interconnected panels of mesh composed of longitudinal or horizontal wires and cross or vertical wires, whereby the adjacent edges of two juxtaposed panels are bent over and hook into each other so that the ends of the bent longitudinal or horizontal wires of said two juxtaposed panels butt together in pairs to form loops located in one vertical row, the ends of the said adjacent edges of the said panels are formed by one cross or vertical wire, and whereby a connection rod provided with a pin-shaped end is fitted through said row of loops.

Such a holder is known from AT—B—296.157.

A disadvantage of this holder according to AT—B—296.157 is its poor stability relative to the ground or its too easy a movability relative to the ground.

US—A—4.211.033 teaches a holder or container for compost or suchlike material, comprising a number of interconnected panels of mesh composed of longitudinal and cross wires. An advantage of this holder according to US—A—4.211.033 is that it is possible to fold this holder in a relatively compact form as compared with a roll of welded mesh or netting, so that the costs of shipment and storage are considerably reduced. This is clearly described in column 1, lines 31 to 35 of this patent.

A disadvantage of this holder according to US—A—4.211.033 is that the adjacent edges of wires of two juxtaposed or successive panels are connected to each other by means of closed rings; the result is that detaching these panels from each other is a cumbersome operation; for example for replacing a damaged panel. Here again, this holder according to US—A—4.211.033 has a poor stability relative to the ground or this holder is easy to move relative to the ground.

It is an object of the invention to provide a holder or container with appropriate means whereby the disadvantage of poor stability to the ground is eliminated.

Therefore, the invention proposes that in a holder or container as described above or according to AT—B—296.157, the connection rod has a hook-shaped end at the opposite end to said pin-shaped end, such that when the connection rod is pushed into the ground, the hook-shaped end butts against the uppermost longitudinal or horizontal wires.

An advantage of the holder according to the invention is that the holder is firmly anchored relative to the ground and cannot be unnecessarily moved relative to the ground. This is particularly true when the pin-shaped end of the connection rod is pushed into the ground until the hook-shaped end butts against the uppermost longitudinal wires.

The invention will be further clarified in the following description whereby reference is made to the adjoining drawing, in which:

Figure 1 is a perspective view of a holder or container according to the invention;

Figures 2 and 3 are perspective views of parts of two juxtaposed or successive panels during the successive stages of the operation of connecting the panels.

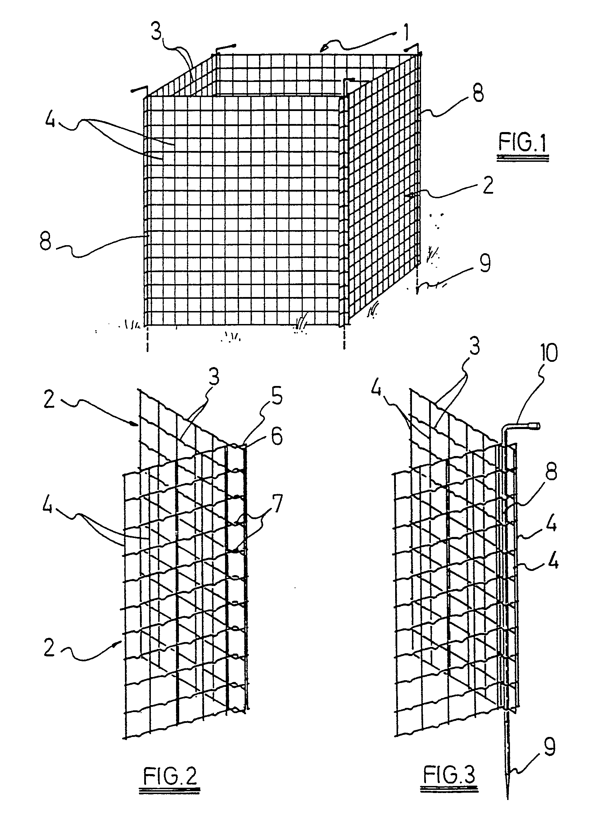

The holder or container 1 for compost or suchlike material according to Figure 1 comprises four interconnected mesh panels 2. In the embodiment shown in Figure 1, the horizontal or longitudinal wires 3 and the vertical or cross wires 4 form substantial square meshes and the longitudinal and cross wires 3, 4 are welded together at the junctions. These wires 3 and 4 have, for example, a diameter of approximately 3 mm, whereby the side of the meshes is approximately 50 mm. The panels 2 of welded mesh are preferably covered with a layer of synthetic material. These mesh panels thus possess a certain degree of rigidity.

Figure 2 is a detailed and perspective view of two juxtaposed and successive panels 2. The adjacent edges 5, 6 of these panels 2 are bent through a substantially straight angle and hook into each other so that the ends of the bent longitudinal wires 3 of these panels 2 thus form loops 7 located in one row.

Figure 3 shows how a connection rod 8 is fitted through the loops 7. This connection rod 8 is provided with a pin-shaped end 9 which is driven into the ground or the soil and a hook-shaped end 10 which butts against the uppermost longitudinal wires 3.

Figures 2 and 3 clearly show that the ends of the bent longitudinal wires 3 of the panels 2 butt against each other in pairs and thus form closed rings 7. The ends of the edges of the two panels 2 are formed by one cross wire 4.

It is clear that by means of the connection rods 8 the panels 2 can be rapidly connected to each other and detached from each other.

The invention is not limited to the embodiment described above whereby the holder is composed of four interconnected panels. It is clear that this holder may be composed of a larger or smaller number of panels. In the embodiment of the holder shown in the drawing, the panels 2 are substantially entirely flat. So, for example, it may be possible to bend the four panels 2 of the holder 1 shown in Figure 1 in the middle to form an octagonal holder 1. The holder according to the invention can be used for many applications, for example they can be placed around trees for protection against animals.

# Claim

A holder or container for compost or such like material, comprising a number of interconnected panels (2) of mesh composed of longitudinal or horizontal wires (3) and cross or vertical wires (4), whereby the adjacent edges (5, 6) of two juxtaposed panels (2) are bent over and hook into each other so that the ends of the bent longitudinal or horizontal wires (3) of said two juxtaposed panels (2) butt together in pairs to form loops (7) located in one vertical row, the ends of the said adjacent edges (5, 6) of the said panels (2) are formed by one cross or vertical wire (4), and whereby a connection rod (8) provided with a pin-shaped end (9) is fitted through said row of loops (7), characterized in that said connection rod (8) has a hook-shaped end (10), at the opposite end to said pin-shaped end, such that when the connection rod (8) is pushed into the ground, the hook-shaped end (10) butts against the uppermost longitudinal or horizontal wires (3).

## Patentanspruch

Behälter oder Gefäss für Kompost oder ein ähnliches Material, der eine Anzahl von miteinander verbundenen Platten (2) eines Gitters enthält, das aus Längs- oder Horizontaldrähten (3) sowie Quer- oder Vertikaldrähten (4) aufgebaut ist, wobei die Nachbarkanten (5, 6) von zwei aneinandergrenzenden Platten (2) umgebogen und inneinander verhakt werden, sodass die Enden der gebogenen Längs- oder Horizontaldrähte (3) der beiden aneinandergrenzenden Platten (2) paarweise stumpf aneinandergefügt sind, um Schleifen (7) zu bilden, die in einer vertikalen Reihe angeordnet sind, wobei die Enden der Nachbarkanten (5, 6) der Platten (2) von einem Quer- oder Vertikaldraht (4) gebildet werden, und wobei eine Verbindungsstange (8), die mit einem zapfenförmigen Ende (9) versehen ist, durch die Reihe von Schleifen (7) gesteckt wird, dadurch gekennzeichnet, dass die Verbindungsstange (8) an dem dem spitzen Ende entgegengesetzen Ende ein hakenförmiges Ende (10) besitzt, sodass dann, wenn die Verbindungsstange (8) in den Boden gedrückt wird, das hakenförmige Ende (10) auf den obersten Längs- oder Horizontaldrähten (3) aufliegt.

## Revendication

Dispositif pour maintenir ou contenir du compost ou un matériau analogue, comprenant un certain nombre de panneaux de grillage (2) reliés entre eux et composés de fils métalliques longitudinaux ou horizontaux (3) et de fils métalliques transversaux ou verticaux (4), les bords adjacents (5, 6) de deux panneaux juxtaposés (2) étant pliés et accrochés l'un dans l'autre de façon que les extrémités des fils métalliques longitudinaux ou horizontaux pliés (3) de ces deux panneaux juxtaposés (2) soient placées en butée deux par deux l'une contre l'autre de façon à former des boucles (7) qui sont disposées suivant une rangée verticale, tandis que les extrémités de ces bords adjacents (5, 6) desdits panneaux (2) sont constituées par un fil métallique transversal ou vertical (4) et qu'une tige de liaison (8) présentant une extrémité en forme de pointe (9) est engagée à travers la rangée de boucles (7), caractérisé en ce que ladite tige de liaison (8) présente une extrémité en forme de crochet (10) à l'extrémité opposée à l'extrémité en forme de pointe, de sorte que, lorsque cette tige de liaison (8) est enfoncée dans le soi, l'extrémité en forme de crochet (10) vient en butée contre les fils métalliques longitudinaux ou horizontaux (3) supérieurs.

0 154 049

FIG.1

FIG.2

FIG.3